Europäisches Patentamt

European Patent Office

Office européen des brevets

(19)

(11) EP 0 472 442 B1

(12) **EUROPEAN PATENT SPECIFICATION**

(45) Date of publication and mention
of the grant of the patent:
**29.05.1996 Bulletin 1996/22**

(51) Int Cl.$^6$: **H04N 9/79**

(21) Application number: **91307799.6**

(22) Date of filing: **23.08.1991**

(54) **Video signal recording apparatus**

Videosignalaufzeichnungsgerät

Dispositif d'enregistrement de signal vidéo

(84) Designated Contracting States:
**DE FR NL**

(30) Priority: **24.08.1990 JP 223335/90**

(43) Date of publication of application:
**26.02.1992 Bulletin 1992/09**

(73) Proprietor: **SONY CORPORATION**
**Tokyo 141 (JP)**

(72) Inventor: **Sakamoto, Etsurou,**
**c/o Patents Division**
**Shinagawa-ku, Tokyo 141 (JP)**

(74) Representative: **Cotter, Ivan John et al**
**D. YOUNG & CO.**
**21 New Fetter Lane**
**London EC4A 1DA (GB)**

(56) References cited:
**EP-A- 0 190 919**      **US-A- 4 908 581**

- **PROCEEDINGS OF THE ANNUAL CONFERENCE ON VIDEO, AUDIO AND DATA RECORDING 24 April 1990, IEE LONDON GB pages 93 - 100 , XP218942 SASAKI, OHTSU, CHIBA, BANNAI ET. AL. '1/2 -inch video cassette recorder for baseband hdtv'**

EP 0 472 442 B1

## Description

This invention relates to video signal recording apparatus. Embodiments of the apparatus may be used for recording a high definition television (HDTV) signal together with a burst clock signal, the latter being used during a subsequent reproduction operation to recover the video signal, such as to remove timebase fluctuations from the reproduced HDTV signal.

Video recorders for recording and reproducing HDTV signals have been proposed. In one proposal, line sequential chrominance signals derived from the chrominance component are multiplexed with a luminance signal in time division multiplexed format to produce a time division multiplexed (TDM) signal which is recorded on a record medium in a plurality of channels. For example, the TDM signal is timebase expanded to occupy a duration equal to about two horizontal line intervals; and then the expanded TDM signal is timebase compressed so that it may be recorded in a reduced length of track. The remaining track space resulting from such compression is available for the recording of pulse code modulated (PCM) audio signals. By separating the video and PCM audio signals into a plurality of channels, such as two channels, a plurality of tracks may be recorded simultaneously with each pass of the recording head assembly across the record medium. A related proposal for recording HDTV signals is found in Japanese laid-open patent specification JP-A-63194494.

When recorded HDTV signals are played back, timebase fluctuations are corrected by supplying those signals to timebase correction circuits; and thereafter, the timebase corrected signals are stored temporarily in a frame memory from which they are read out to a line memory for recovery. Typically, the timebase corrected signals are written into the frame and line memories in synchronism with a clock signal whose frequency is the same as had been used during the recording operation. For proper synchronism of the clock signal during a playback operation, the recording operation provides for a burst of the clock signal (referred to as a burst clock signal) to be included in and recorded with the multiplexed video and PCM audio signals. Hence, during the playback operation, the burst clock signal is detected and used by the timebase correction circuits for removing timebase fluctuations from the reproduced video signals and to synchronize the clock that controls the writing of the reproduced video signal into the frame and line memories.

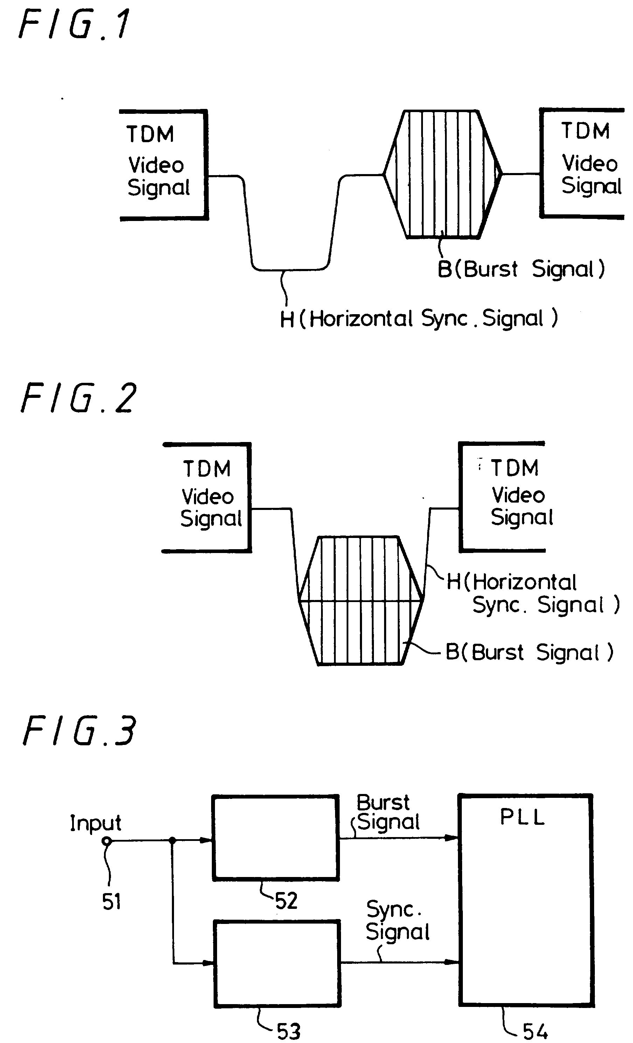

One example of combining a burst clock signal and a TDM video signal is illustrated by the schematic representations of the wavefons shown in Figure 1. It is appreciated that successive horizontal periods of the TDM video signal are separated by a horizontal blanking interval which includes a negative-going horizontal synchronizing signal H. The horizontal blanking interval also includes a DC level onto which the burst block signal B is superimposed. During reproduction, the burst clock signal is separated from the horizontal blanking interval and used for the aforementioned timebase correction and memory write-in operations.

It is, of course, desirable to increase the signal-to-noise (S/N) ratio of the burst clock signal. However, an increased S/N ratio should not be accompanied by a concomitant increase in the bandwidth of the TDM video signals. Rather, it is preferable to increase the interval of the TDM video signal and to increase the duration of the burst clock signal while reducing, to the intent it is possible, the period of the horizontal blanking interval. This means, therefore, that the pulse width of the horizontal synchronizing signal and the number of cycles included in the burst clock signal are limited.

While an increase in the amplitude of the burst clock signal may improve the S/N ratio thereof during a reproduction operation, this may, nevertheless, be accompanied by a significant drawback. For example, if the signal reproducing apparatus includes a pulse-count type of demodulator, an increase in the burst clock signal amplitude will produce an undesirable moire pattern which, in turn, will disturb the burst clock signal and will impede the proper recovery of the horizontal synchronizing signal and the reproduction of the clock signal.

According to the present invention there is provided video signal recording apparatus comprising:

video signal processing means for processing a video signal in accordance with a predetermined format to produce a processed video signal for recording, said processed video signal having a DC level portion therein;
burst clock generating means for generating a burst clock signal of frequency $f_b$ for use in recovering the video signal during a subsequent reproduction operation;
adding means for adding the burst clock signal to the DC level portion of the processed video signal to produce a combined signal;
frequency modulating means for frequency modulating the combined signal such that the DC level of the processed video signal is represented by a modulated frequency $f_a$, and wherein if:

$$f_a \geq \frac{m}{2} f_b,$$

then $|2f_a - mf_b - f_b| \geq 0.15f_b$ and if:

$$f_a < \frac{m}{2} f_b,$$

then $|mf_b - 2f_a - f_b| \geq 0.15f_b$, where m is an integer; and
recording means for recording the frequency modulated combined signal on a record medium.

Embodiments of this invention can thus provide signal recording apparatus in which a burst clock signal is combined with a frequency modulated video signal for recording on a record medium and, when subsequently reproduced, stable recovery of the burst clock signal is possible.

$f_b/f_a$ may be $\leq 0.4$. Preferably, the burst clock signal has a modulation figure in the range of 0.7 to 1.4.

If the processed video signal is a time division multiplexed signal (wherein the luminance and chrominance components of the video signal are time division multiplexed), successive horizontal periods of the TDM video signal are separated by a horizontal blanking interval to which the burst clock signal is added. In one embodiment, the burst clock signal is added to the achromatic level of the TDM video signal; and in another embodiment, the burst clock signal is superimposed onto the horizontal synchronizing signal normally included in the horizontal blanking interval.

The invention will now be described by way of example with reference to the accompanying drawings, throughout which like parts are referred to by like references, and in which:

Figure 1 is a schematic representation of video signal waveforms in which a burst clock signal is recorded with a processed video signal;

Figure 2 is a schematic representation of preferred video signal waveforms wherein a burst clock signal is recorded with a processed video signal;

Figure 3 is a block diagram of burst and synchronizing signal recovery apparatus that may be used to recover the burst clock signal and the horizontal synchronzing signal recorded as shown in Figure 2;

Figure 4 is another block diagram of apparatus for recovering the recorded video and burst clock signals shown in Figure 2;

Figure 5 is a graphical representation of the spectrum of a spurious signal that may be produced if a pulse-count type of demodulator is used to recover the recorded video signal;

Figures 6A and 6B comprise a block diagram of one embodiment for recording and reproducing video signals wherein the present invention finds application;

Figures 7A to 7E are for understanding the manner in which the video signals are recorded by the apparatus shown in Figures 6A and 6B;

Figure 8 is a schematic representation of a record/playback head assembly used with the apparatus of Figures 6A and 6B; and

Figures 9A and 9B are schematic representations of eight successive tracks in which a frame of HDTV signals is recorded together with PCM audio signals by the embodiment shown in Figures 6A and 6B.

Referring to Figure 2, there is illustrated a schematic waveform representation of the blanking interval which separates two successive horizontal periods of a processed video signal. In the video recording environment described herein, the processed video signal is a time division multiplexed (TDM) video signal and will be described in greater detail below. As compared with the schematic waveform representation of Figure 1, it is seen that the horizontal blanking period of Figure 2 is narrower; and the burst clock signal B is superimposed onto the sync tip level of the negative-going horizontal synchronizing signal H. Moreover, the duration of the horizontal synchronizing signal is greater in Figure 2 that in Figure 1.

Although the horizontal blanking interval of Figure 2 is preferred, the present invention may be used with the wider horizontal blanking interval shown in Figure 1. In Figure 1, the burst clock signal is superimposed onto the DC level which corresponds to the blanking level. In Figure 2, the burst clock signal is superimposed onto the DC level which corresponds to the horizontal sync tip. Thus, from Figures 1 and 2, the burst clock signal may be superimposed on the achromatic level of the TDM video signal. If the TDM video signal, horizontal blanking interval and horizontal synchronizing signal are frequency modulated for recording purposes, embodiment of the present invention proceed on the recognition of a desired relationship between the modulating frequency $f_a$ which represents the DC level onto which the burst clock signal is superimposed and the burst clock frequency $f_b$. Now, assuming that m is an integer, if:

$$f_a \geq \frac{m}{2} f_b,$$

then $|2f_a - mf_b - f_b| \geq 0.15f_b$. However, if

$$f_a < \frac{m}{2} f_b,$$

then $|mf_b - 2f_a - f_b| \geq 0.15f_b$.

Typical examples of $f_a$ and $f_b$ may be, for instance, $f_a$ = 18.5 MHz and $f_b$ = 4.995 MHz.

As mentioned previously, the addition of the burst clock signal to the horizontal blanking interval shown in Figure 2 is preferred, although embodiments of the present invention produce improved results even if the burst clock signal is added to the horizontal blanking interval of the type shown in Figure 1. In the Figure 2 configuration, the horizontal synchronizing signal may be sufficiently wide as to occupy substantially the entire duration of the blanking interval. It is appreciated that this width facilitates the recovery of the horizontal synchronizing signal during a playback mode. Additionally, in the Figure 2 configuration, since the burst clock signal is superimposed onto the wide horizontal synchronizing signal, a sufficient number of cycles of the burst clock are provided as to facilitate the extraction of the burst clock by relatively simple and inexpensive means, such as a relatively simple bandpass filter. Consequently, the configuration shown in Figure 2 results in accurate, reliable and stable separation during a playback mode of the horizontal synchronizing signal and, additionally, assures that the clock signal will be accurately recovered from the reproduced burst clock signal.

On embodiment for recovering the horizontal synchronizing signal and the burst clock signal from reproduced frequency modulated TDM video signals is illustrated in Figure 3. Here, an input terminal 51 receives the video signal reproduced from, for example, a record medium, after that video signal has been frequency demodulated. A bandpass filter 52 and a low-pass filter 53 are coupled to the input terminal 51; and the bandpass filter 52 passes the signal component having the burst clock frequency $f_b$, while the low-pass filter 53 extracts the horizontal synchronizing signal.

Alternatively, the bandpass filter 52 may be replaced by a high-pass filter. Also, the low-pass filter 53 may be replaced by a trap circuit. In any event, the burst clock signal and the horizontal synchronizing signal may be easily separated from the reproduced frequency demodulated video signal. The separated burst clock signal is supplied to a phase locked loop (PLL) 54 and the synchronizing signal is supplied to a sync separator. As a result, the horizontal synchronizing signal is properly separated, and the phase locked loop responds to the separated burst clock signal to generate the clock signal for recovering the reproduced video signal.

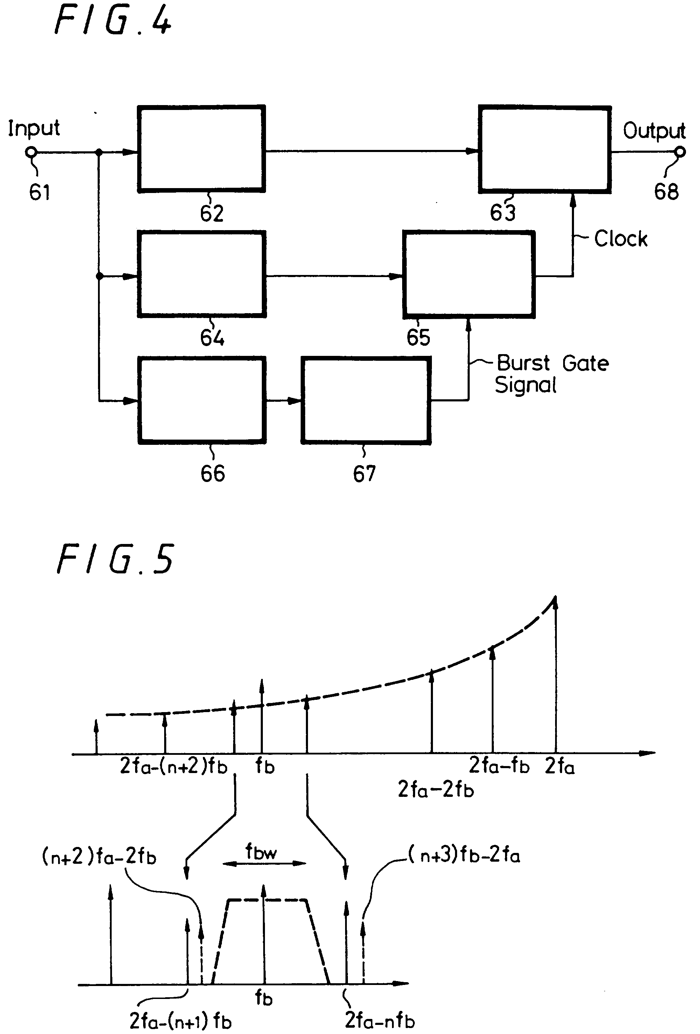

Figure 4 illustrates another circuit for recovering a clock signal from the recorded clock burst signal, and for using that clock signal to recover the video signal reproduced from the record medium. An input terminal 61 is supplied with the reproduced frequency demodulated video signal which, as discussed above, and as shown in Figure 2, includes the horizontal synchronizing signal and the burst clock signal superimposed thereon. A low-pass filter 62 extracts the TDM component from the demodulated video signal and couples the extracted TDM component to an analogue-to-digital (A/D) converter 63. A bandpass filter 64 is also coupled to the input terminal 61, and functions to pass the demodulated burst clock signal included in the reproduced video signal. Alternatively, the burst clock signal may be passed by a high-pass filter. In either event, the burst clock signal that is extracted from the demodulated video signal is supplied to a gated PLL 65.

Another low-pass filter 66, which may be similar to the low-pass filter 53 of Figure 3, is coupled to the input terminal 61 and extracts the horizontal synchronizing signal from the demodulated video signal. Alternatively, a trap circuit may be used to extract the horizontal synchronizing signal. This extracted signal is applied to a synchronizing separator 67 which, in turn, produces a horizontal synchronizing signal. Thus, the combination of the bandpass filter 64, the low-pass filter 66 and the synchronizing separator 67 separates the burst clock signal and the horizontal synchronizing signal from the reproduced demodulated video signal.

The separated synchronizing signal is applied to the gated PLL as a gate signal. Accordingly, the gated PLL 65 is enabled during the interval that the burst clock signal is expected (as seen from Figure 2), and regenerates the clock signal therefrom. This clock signal is supplied to the A/D converter 63 for digitizing the TDM signal component extracted by the low-pass filter 62. The digitized TDM component then is coupled from an output terminal 68 to further processing circuitry, whereby the original video signal is recovered.

As is known, white noise is converted to noise exhibiting a triangular-shaped spectrum by a frequency demodulator. Accordingly, it is preferable that the relationship between the burst clock frequency $f_b$ and the modulating frequency $f_a$ be limited as follows:

$$\frac{f_b}{f_a} \leq 0.4$$

If the frequency modulated video signal which is reproduced from the record medium is demodulated by a pulse-count type demodulator, a spurious signal may be produced. Figure 5 is a graphical representation of the spectrum of this spurious signal and its relationship to the burst clock frequency $f_b$ and modulating frequency $f_a$. The frequency of this spurious signal may be represented as $F_{sp}$, wherein $F_{sp} = 2f_a - mf_b$. As seen in Figure 5, as m increases, the amplitude of the spurious signal decreases.

To extract the burst signal of frequency $f_b$ from the spectrum illustrated in Figure 5, a bandpass filter having a pass band $f_{bw}$ of about $0.3f_b$ may be used. Figure 5 illustrates the pass band of this filter in broken lines, and the aforementioned limitation on its bandwidth is seen to result in the extraction of the burst clock signal without interference from spurious signal components. A bandwidth $f_{bw}$ of about $0.3f_b$ permits the implementation of a relatively efficient bandpass filter at reasonable cost.

In the foregoing equations which represent the relationship between the clock burst frequency $f_b$ and the modulating frequency $f_a$, and in the equation which represents the spurious signal $F_{sp}$, the integer m typically may be m = 5, 6, 7 or 8.

In view of the aforementioned relationship between the burst clock frequency $f_b$ and the modulating frequency $f_a$, the amplitude of the burst signal may be increased so as to improve its S/N ratio without introducing any significant disturbance or distortion in the reproduced burst clock signal. Preferably, the modulation figure of the burst clock signal is selected to be in the range of from 0.7 to 1.4. This limitation in the modulation figure further improves the S/N ratio and contributes to further reduction of burst clock signal disturbance. Furthermore, and as is seen from Figure 2, since the horizontal blanking interval may be narrowed (as is readily seen by comparing Figures 2 and 1), the duration of the TDM video signal may be increased. Hence, more information may be provided in the TDM signal period.

Although the signal configuration represented by the waveform of Figure 2 is preferred, the invention may be used with the configuration represented by the waveform of Figure 1. In either case, the DC level portion of the TDM video signal onto which the burst clock signal is superimposed is the achromatic level of the TDM signals. In Figure 1, this DC level is the usual blanking level, and in Figure 2 this DC level is the sync tip level of the horizontal synchronizing signal. Since the DC level is the achromatic level, the dynamic range of the D/A converters used for recording and for reproduction may be used most effectively.

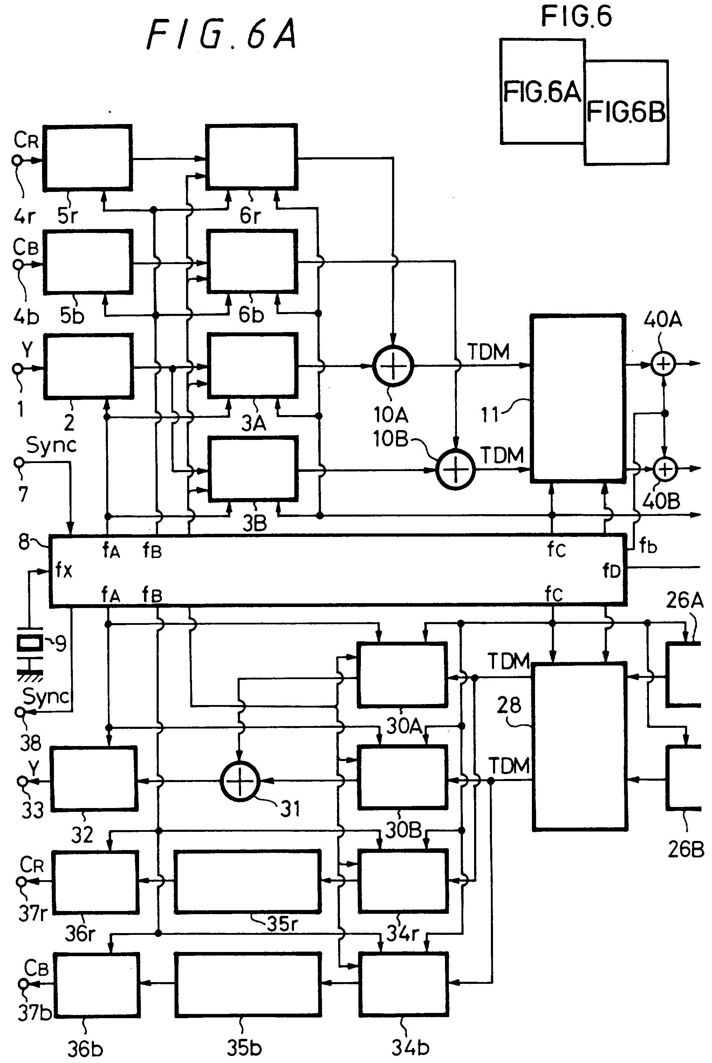

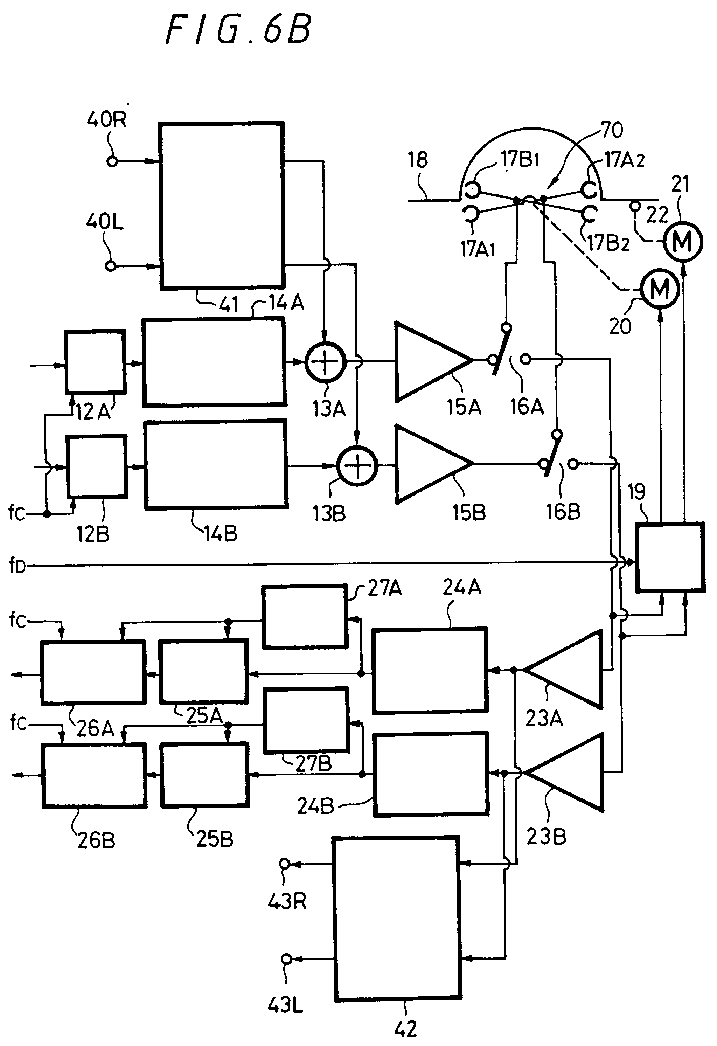

Referring now to Figures 6A and 6B, there is illustrated a block diagram of a VTR capable of recording and reproducing an HDTV signal and which may be of the general type referred to above or in Japanese laid-open patent specification JP-A-63-194494. As described therein, and as will be explained in greater detail below, the chrominance signal of the input HDTV signal is converted into a line sequential chroma signal which is timebase expanded, timebase compressed and multiplexed with the HDTV luminance component to form a TDM signal which is then separated into a plurality of channels for recording by a plural-channel head assembly. It is assumed, for the purpose of the present description, that the HDTV signal is separated into its luminance component Y, supplied to an input terminal 1, and red and blue chrominance components CR and CB supplied to Input terminals 4r and 4b, respectively. The luminance component Y is digitized by an A/D converter 2 at a rate determined by a sampling clock signal of frequency $f_A$. As will be discussed, alternate lines of the digitized luminance signal are written into the line memories 3A and 3B, respectively.

The red and blue chrominance components supplied to the input terminals 4r and 4b are in the form of red and blue colour difference signals R-Y and B-Y, respectively. These colour difference chrominance components are digitized by A/D converters 5r and 5b, respectively, at a rate determined by a sampling clock of frequency $f_g$. The digitized colour difference signals then are written into line memories 6r and 6b, respectively.

A synchronizing signal included in the HDTV signal is separately supplied to an input terminal 7 for coupling to a control circuit 8. The control circuit 8 is provided with a reference clock signal of frequency $f_x$ generated by a crystal oscillator 9 which, as is appreciated, exhibits a very stable frequency. The purpose of the control circuit 8 is to generate several different clock signals derived from the reference clock frequency $f_x$ and synchronized with the HDTV synchronizing signal. These different clock signals are used to sample the luminance and chrominance components, to write the digitized luminance and chrominance components into line memories, to timebase compress the luminance and chrominance components and to timebase compress a digitized audio signal, all of which are described below.

The digitized luminance components stored in the line memory 3A are read therefrom in response to a read clock of frequency $f_c$ produced by the control circuit 8. The digitized red colour difference component CR written into the line memory 6r is read from this line memory by the read clock $f_c$ and is combined in a summing circuit 10A with the luminance component read from the line memory 3A. Similarly, the luminance component stored in the line memory 3B is read therefrom by the read clock

$f_c$ and is combined in a summing circuit 10B with the blue colour difference component DB read from the line memory 6b.

The summing circuit 10A functions to combine odd line intervals of luminance component Y and odd line intervals of red colour difference component CR to produce the combined signal TDM. Similarly, the summing circuit 10B functions to combine the even line intervals of luminance component Y read from the line memory 3B and even line intervals of blue colour difference component DC read from the line memory 6b to produce the signal TDM. These TDM signals produced by the summing circuits 10A and 10b are written into a frame memory 11 in response to the read clock $f_c$.

The TDM signals of alternate line intervals stored in the frame memory 11 are read therefrom at a rate which, in the present embodiment, is less than the memory write rate. Consequently, the frame memory 11 functions to timebase expand the TDM signals; and these timebase expanded video signals are coupled to digital-to-analogue (D/A) converters 12A and 12B by way of adding circuits 40A and 40B, respectively, which add to the TDM signals the burst clock signal $f_b$ generated by the control circuit 8, resulting in the combined signals as shown in Figure 2. As an example $f_b$ generated by the control circuit 8, resulting in the combined signals as shown in Figure 2. As an example $f_b = f_c/6$. The D/A converters 12A and 12B return the TDM signals to analogue form at a rate determined by clock $f_c$ supplied to the D/A converters 12A and 12B by the control circuit 8.

The combined burst clock and TDM analogue signals produced by the D/A converters 12A and 12B are coupled to emphasizing and frequency modulating circuits 14A and 14B, respectively, whereat the combined signals are converted to FM signals for recording. The adders 40A and 40B preferably combine the burst clock signal and the TDM signals with the timing relationship shown in Figure 2, or as shown in Figure 1, whereby the burst clock signal is superimposed onto the DC level of the horizontal blanking interval (as shown in Figure 1) or onto the horizontal synchronizing signal (as shown in Figure 2).

The FM video signals from the modulators 14A and 14B are coupled to adders 13A and 13B, respectively (Figure 6B), whereat they are combined with information signals ( to be described) added thereto in multiplexed format. The resultant multiplined signals are supplied to respective recording heads 17A and 17B by recording amplifiers 15A and 15B via record/playback switches 16A and 16B, respectively, as more clearly shown in Figure 6B. The recording heads 17A and 17B are mounted on a recording head drum 70 which rotates to scan successive oblique tracks across a magnetic tape 18 which is deployed about the head drum 70 with a wrap angle no greater than 180°.

In the example illustrated herein, audio information signals, preferably pulse code modulated (PCM) audio signals, are multiplexed with the video and burst clock signals. As more clearly shown in Figure 6B, stereo right and left audio signals are supplied to an audio signal recording and processing circuit 41 which operates to encode the digitized audio signals as PCM signals and, preferably, processes the digitized signals in accordance with known error correction techniques. The resultant PCM audio signals are written into a frame memory (not shown) and subsequently read therefrom at a read-out rate determined by a read clock generated by the control circuit 8. The frame memory serves to timebase compress the PCM audio signals; and these compressed signals are supplied to the adding circuits 13A and 13B.

A servo circuit 19 (Figure 6B) is supplied with a reference clock signal $f_D$ from the control circuit 8 for controlling the rotation of the heads 17A and 17B as well as the transport speed of the tape 18. Accordingly, the servo circuit 19 controls a head drive motor 20 which is coupled to the head drum 70 for rotatably driving the heads 17A and 17B. The servo circuit 19 is also coupled to a capstan drive motor 21 which drives a capstan 22 to transport the tape 18.

When recorded HDTV signals are to be reproduced from the tape 18, the signals recorded therein are reproduced by the heads 17A and 17B and supplied through the record/playback switches 16A and 16B to the servo circuit 19 and also to playback amplifiers 23A and 23B. The amplified FM signals are coupled to de-emphasizing and frequency demodulated circuits 24A and 24B as well as to an audio signal reproducing and processing circuit 42 which recovers the PCM audio signals and converts them to analogue left and right audio signals. Stereophonic audio signals, for example, reproduced by the audio reproducing and processing circuit are applied to output terminals 43L and 43R.

De-emphasized and frequency-modulated signals from the de-emphasizing and frequency demodulating circuits 24A and 24B are supplied to clock generators 27A and 27B, which may be of the type shown in Figures 3 or 4, to recover the clock signal from the reproduced burst clock signal. The recovered clock signal is supplied to A/D converters 25A and 25B and also to timebase correctors 26A and 26B for correcting timebase fluctuations that may be present in the reproduced signals.

Corrected TDM signals from the timebase correctors 26A and 26B are written into a frame memory 28 from which the signals are read and supplied to line memories 30A and 30B as well as to line memories 34r and 34b. Luminance signals are read from the line memories 30A and 30B and are added by an adder 31, whose sum signal is then supplied through a D/A converter 32 to an output terminal 33, thereby recovering the luminance signal Y. Chrominance signals are read from the line memories 34r and 34b and supplied to interpolating circuits 35r and 35b which produce interpolated representations of those line intervals of chrominance signals that were not recorded. Thus, successive lines of chrominance signals are coupled through D/A converters 36r and 36b to output terminals 37r and 37b whereat the chroma signals CR and CB are recovered.

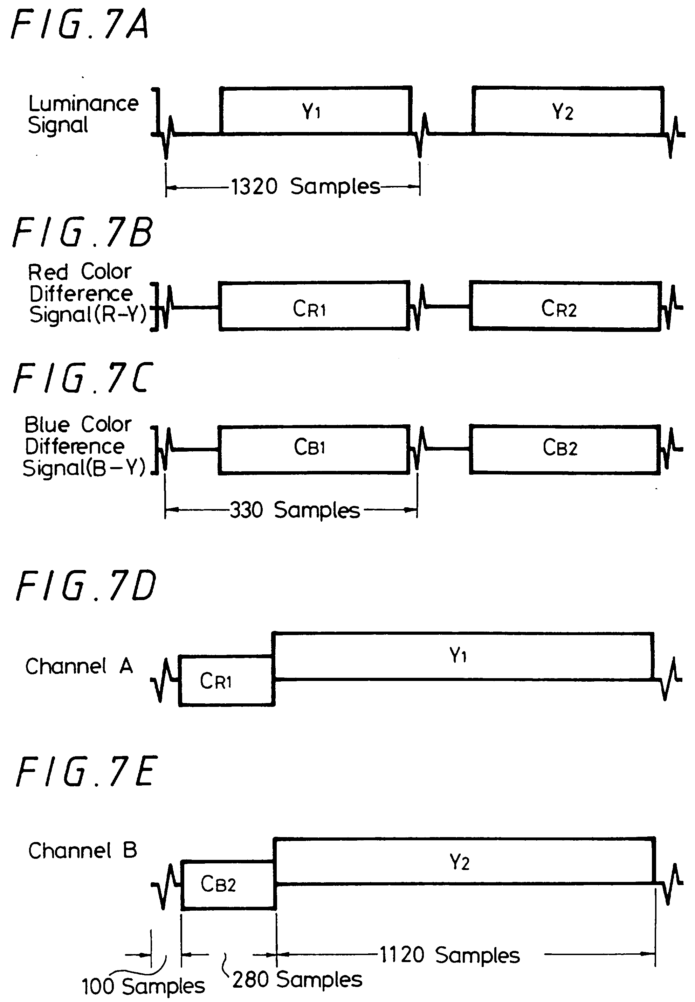

In operation, the luminance component Y supplied to the A/D converter 2 is sampled to produce digitized representations of successive line intervals as shown in Figure 7A. In one embodiment, 1320 samples are generated during each line interval and, in accordance with this example, the horizontal blanking interval comprises about 200 samples.

Similarly, the red colour difference component CR supplied to the A/D converter 5r is digitized to produce digital representations of successive line intervals of the red colour difference signal, as shown in Figure 7B. The luminance component sampling clock frequency $f_A$ is approximately four times the chrominance sampling clock frequency $f_B$, whereupon the chrominance component is sampled at a rate sufficient to produce about 330 samples during each line interval. Of these, the horizontal blanking interval comprises approximately 50 samples.

In a similar manner, the blue colour difference component CB supplied to the A/D converter 5b is digitized in response to the chrominance sampling clock frequency $f_B$ to produce digital representations of successive line intervals, as shown in Figure 7C.

In one embodiment, the reference clock frequency $f_X$ produced from the crystal oscillator 9 is a fraction of the fundamental clock frequency of the HDTV signal, the latter being equal to 74.25 MHz. In this embodiment:

$$f_X = f_A = (3/5) \times 74.25 = 44.55 \text{ MHz} = 1320 \, f_{H1}$$

wherein $f_{H1} = 33.75$ KHz and is the horizontal line frequency of the HDTV signal.

As mentioned above, $f_B = f_A/4 = 330 \, f_{H1}$.

In accordance with the foregoing, and as shown in Figures 7A to 7C, the luminance component is represented by 1320 samples per line interval, the red colour difference component CR is represented by 330 samples per line interval and the blue colour difference component CB likewise is represented by 330 samples per line interval. The luminance component samples are written into the line memories 3A and 3B, and the chrominance component samples are written into the line memories 6r and 6b, respectively. In particular, each line memory has written thereinto alternate line intervals. Thus, the luminance component line intervals written into the line memory 3A may be represented as $Y_1$, $Y_3$, $Y_5$, etc; the luminance component line intervals written into the line memory 3B may be represented as $Y_2$, $Y_4$, $Y_6$ etc; the line intervals of the red colour difference component written into the line memory 6r may be represented as $CR_1$, $CR_3$, $CR_5$, etc, and the line intervals of the blue colour difference component written into the line memory 6b may be represented as $CB_2$, $CB_4$, $CB_6$, etc.

The alternate line intervals stored in the respective line memories are read therefrom at the read-out rate $f_C$

which, in the preferred embodiment, is about one-half the luminance write clock rate $f_A$. As a result, the luminance component read from the line memories 3A and 3B is timebase expanded while the chrominance components read from the line memories 6r and 6b are timebase compressed. The luminance component read from the line memory 3A is combined with the chrominance component read from the line memory 6r in the summing circuit 10A, resulting in the TDM signal schematically illustrated in Figure 7D. Similarly, the luminance component read from the line memory 3B is combined with the chrominance component read from the line memory 6b in the summing circuit 10B to produce the TDM signal schematically illustrated in Figure 7E. As a result, the combined samples read from the line memories 3A and 6r occupy a duration corresponding to two HDTV line intervals, as shown in Figure 7D; and similarly, the combined samples read from the line memories 3B and 6b occupy two HDTV line intervals, as shown in Figure 7E. Notwithstanding this conversion of the time axis, substantially all of the luminance and chrominance component samples that had been written into the respective line memories are read therefrom. For convenience, the combined timebase converted video signal produced by the summing circuit 10A is identified as the channel A timebase converted video signal and the combined timebase converted video signal produced by the summing circuit 10B is referred to as the channel B timebase converted video signal.

If the number of horizontal line intervals included in an HDTV frame is represented as L, the number of samples generated during each line interval is represented as S, and the read clock rate $f_C$ is half the luminance component write clock rate $f_A$, then the relationship between L, S and $f_C$ may be expressed as:

$$\frac{L \times S}{2f_C} = \text{Constant}$$

If L = 1125, S = 1320 and $f_C$ = 44.55/2 MHz, then:

$$\frac{L \times S}{2f_C} = \frac{1125 \times 1320}{44.55 \times 10^6}$$

From the foregoing relationship, it is appreciated that if the number of line intervals included in an HDTV frame increases, and if the number of samples produced during each line interval also increases, then the read clock rate $f_C$ will increase. For example, if L = 1332 and S = 1500, then:

$$f_C = \frac{1332 \times 1500}{2} = 29.97 \text{ MHz} = 880 \, f_{H1} = \frac{37}{55} \, f_A$$

In one numerical example the burst clock signal frequency $f_b = f_c/6 = 4.995$ MHz.

In the example discussed above, the channel A timebase converted video signal supplied to the frame memory 11 by the summing circuit 10A comprises odd line intervals of the luminance component Y and the red colour difference component CR, as shown in Figure 7D. Similarly, the timebase converted video signal supplied to the frame memory 11 by the summing circuit 10 comprises the even line intervals of the luminance component Y and the blue colour difference component CB, as shown in Figure 7E. If the read clock rate $f_C$ is greater than $f_A/2$, it is seen that the duration of each effective horizontal period of the timebase converted video signal supplied to the frame memory 11 is less than twice the HDTV line interval. However, for convenience, it is assumed herein that $f_C = f_A/2$ and, therefore, the duration of each of the channel A and channel B horizontal periods (shown in Figures 7D and 7E) is equal to twice the HDTV horizontal interval. The channel A and channel B timebase converted video signals are written into the frame memory 11 at the $f_C$ rate.

After being written into the frame memory 11, the timebase converted video signals are read therefrom at the $f_C$ rate and combined with the burst clock signal as mentioned above. Preferably, the channel A timebase converted video signals are supplied, by way of the D/A converter 12A, the emphasizing and FM circuit 14A, the adding circuit 13A and the recording amplifier 15A to the head 17A. Similarly, the channel B timebase converted video signals which are read from the frame memory 11 are supplied to the head 17B for recording. As the heads 17A and 17B scan successive tracks across the tape 18, the odd timebase converted line intervals shown in Figure 7D are recorded in each track traced by the head 17A and the even timebase converted line intervals are recorded in each track traced by the head 17B.

As will be described, the heads 17A and 17B are included in two diametrically opposed head assemblies, with one such assembly comprising the heads $17A_1$ and $17B_1$ and the other assembly comprising the heads $17A_2$ and $17B_2$. The pair of heads included in each assembly are angularly displaced from each other in the scanning direction, as will also be described. Consequently, the heads $17A_1$ and $17B_1$ simultaneously record adjacent tracks wherein the track recorded by the head $17A_1$ is formed of odd line intervals and the track recorded by the head $17B_1$ is formed of even line intervals; and when the heads $17A_2$ and $17B_2$ simultaneously scan the tape 18, the head $17A_2$ records a track of odd line intervals and the head $17B_2$ records a track of even line intervals.

In an embodiment wherein the read clock rate $f_C$ is slightly greater than one-half the write clock rate $f_A$, the duration, or horizontal period, of a timebase converted line interval from the frame memory 11 is less than twice the HDTV line interval. Thus, the timebase converted video signal in, for example, channel A does not completely "fill" the converted (or doubled) HDTV line interval. Therefore, all of the timebase converted video signals read from the frame memory 11 when, for example, the head $17A_1$ traces a track may be recorded in a length that is less than the angular extent that the head $17A_1$ is in contact with the tape 18. Stated otherwise, the timebase converted video signal recorded in each track occupies a length that is less than the 180° angular extent that the head contacts the head 18. This extra, or blank space in the track is occupied by the PCM audio signal produced by the audio signal recording and processing circuit 41.

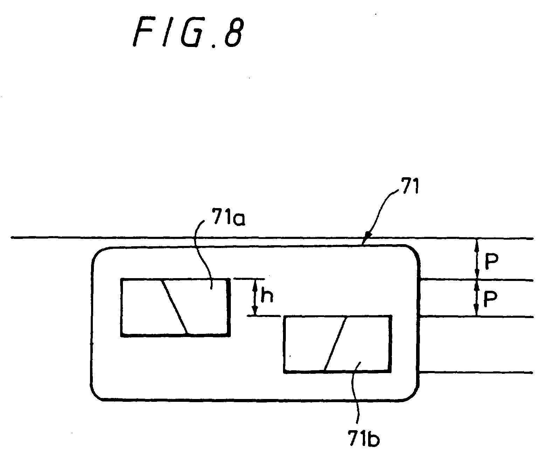

It is preferred that the heads $17A_1$ and $17B_1$ are included in one head assembly, and the heads $17A_2$ and $17B_2$ are included in another head assembly. Figure 8 schematically illustrates a typical head assembly 71 comprising a pair of heads 71a and 71b which are displaced, or offset from each other in the track scanning direction and are additionally displaced from each other by an amount h in a direction parallel to the axis of rotation. It is appreciated that this displacement h defines the track pitch p. Figure 8 also schematically illustrates different azimuth angles formed in the heads 71a and 71b which, as is known, minimizes cross-talk interference due to the picking up of signals from an adjacent track that had been recorded with a head having a different azimuth. The head assembly 71 is effective to record two oblique tracks simultaneously by the heads 71a and 71b, respectively, as this head assembly rotates to scan a trace across the tape 18. It will be seen that one complete rotation of the rotary drum results in the tracing of four successive tracks, two by one head assembly and two by the other head assembly. In a preferred embodiment, one frame of the HDTV signal is recorded in eight tracks and, therefore, two complete rotations of the head drum 70 are effective to record one frame of the HDTV signal. Stated otherwise, the heads are rotated at twice the HDTV frame rate.

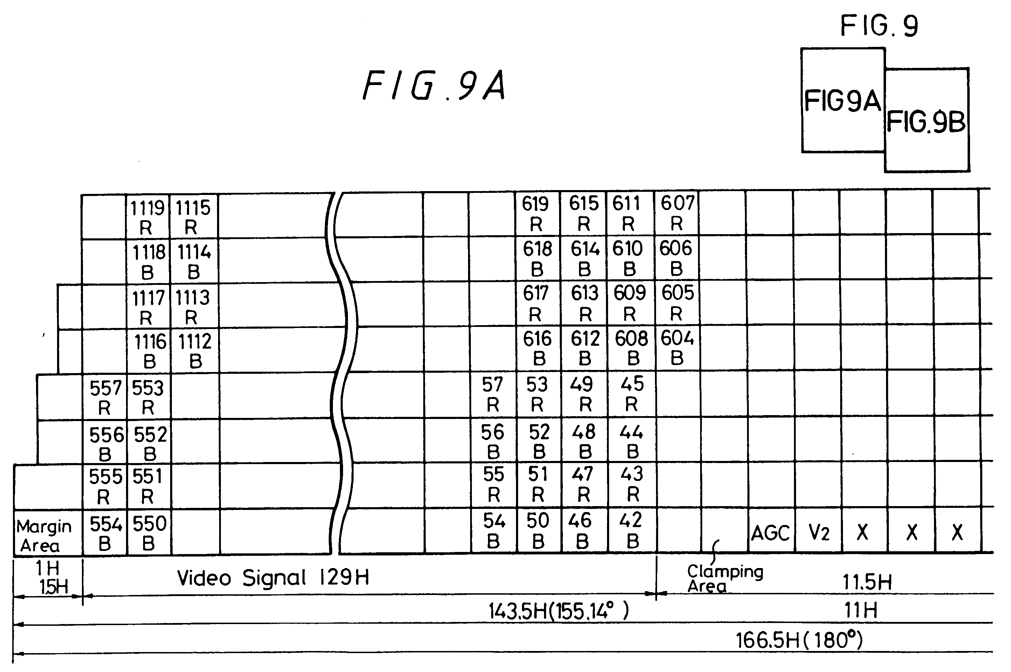

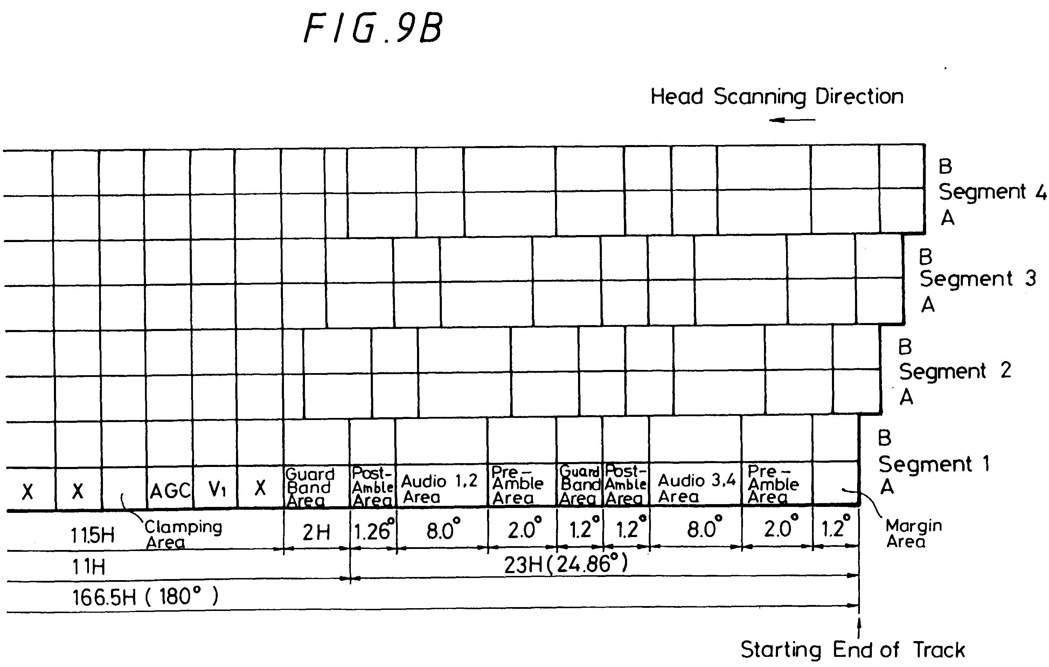

Figures 9A and 9B illustrate one example of the track pattern recorded by two rotations of the two head assemblies to record one frame of the HDTV signal together with the PCM audio signal. It will be appreciated that, during the first half of the first rotation of the head drum 70, tracks A and B of segment 1 are recorded by the heads $17A_1$ and $17B_1$, respectively. Although not shown in Figures 6A and 6B, it should be understood that the multiplexed video and PCM audio signals supplied to the tralling head is delayed by an amount sufficient to align or match the starting ends of tracks A and B. During the second half of the first rotation, the heads $17A_2$ and $17B_2$ record tracks A and B of segment 2. In similar fashion, during the first half of the second rotation, the heads $17A_1$ and $17B_1$ record tracks A and B in segment 3; and during the second half of this second rotation, the heads $17A_2$ and $17B_2$ record tracks A and B of segment 4. Accordingly, one frame of the HDTV signal is recorded in four segments, each segment being formed of two tracks in which two channels are recorded, respectively. It is seen that the PCM audio signal is recorded ahead of the timebase converted video signal in the blank portion produced as a result of the timebase compression of the video signal.

As shown in Figure 9A and 9B, each track is sufficient to record 166.5 horizontal periods. Included in these 166.5 horizontal periods are the PCM audio signal, the timebase converted video signal and several periods in which other information may be recorded. More particularly, the 166.5 horizontal periods correspond to a tape wrap angle of 180°, of which 23.66° is allocated for the recording of audio information. The beginning portion of a track, corresponding to about 1.2°, comprises a margin area during chich the recording head moves into contact with the tape sufficient to record the PCM audio signal.

A preamble area corresponding to 2.0° follows the margin area; and two channels of PCM audio signals are recorded thereafter in a length corresponding to 8.0°. A post-amble area of 1.2° follows the PCM audio signal section, and this, in turn, is followed by a guard band area corresponding to 1. 2°. The preamble, PCM audio signal and post-amble areas comprise a first audio signal recording section. Then, a second audio signal recording section is recorded, comprising a preamble area of 2.0°, a PCM audio signal area of 8.0 ° and a post-amble area of 1.26°. A guard band area of length corresponding to 2 horizontal periods separates the audio signal recording area from the video signal recording area. As an example, a length of 2 horizontal periods ( 2H ) corresponds to about 2.16 °.

The beginning portion of the video signal recording area contains information signals such as vertical synchronizing signals $V_1$ and $V_2$, automatic gain control (AGC) signals, clamping signals, and the like. These signals are recorded in a section of the track which precedes the timebase converted video signal information and has a length of, for example, 11 or 11.5 horizontal periods. For example, this section of the video signal recording area comprises 11 horizontal periods (11H) when odd segments ( for example 1 and 3 ) are recorded and has a length of 11.5H when even segments (for example, 2 and 4) are recorded. This is illustrated more particularly in Figure 9B.

The timebase converted video signals then are recorded in the video signal recording area following the recording of these information signals. As illustrated in Figure 9A, 129 horizontal periods (129H) of timebase converted video signals are recorded in the video signal recording area. Each track then concludes with a margin area of length corresponding to 1H or 1. 5H. If the aforementioned information signals are recorded in an area corresponding to 11H, such as in the odd segments, then this concluding margin area is of a length equal to 1.5H. However, if the information signals are recorded in a length corresponding to 11. 5H, as in the even segments, then this margin area is recorded with a length of 1H.

It will be recognized that, in a given track, only red colour difference chrominance components or only blue colour difference chrominance components are multiplexed with the luminance component for recording. For example, in each track A, the luminance component is multiplexed with the blue colour difference component. However, in each track B, the luminance component is multiplexed with the red colour difference component. The respective original HDTV line intervals from which the multiplexed luminance and chrominance components are derived also are indicated in Figure 9A.

It is seen that 143.5 horizontal periods, corresponding to a length of 155. 14°, are recorded from the beginning of the first guard band area to the end of a track. This length comprises the following signals:

| Guard Band Area | 2.0H |
|---|---|
| Information Signal Area | 11.0H |
| Video Signals | 129.0H |
| Margin Area | 1.5H |
| Total Length | 143.5H |

In Figure 9B, two PCM audio signal sections are provided in the audio signal recording area. This permits the recording of audio information from two audio systems, each comprising two channels. For example, left and right stereo audio signals may be recorded in one PCM audio signal recording section and two channels of SAP audio signals may be recorded in the other PCM audio signal recording section. Of course, the present explanation is not limited to the particular channels, audio systems or audio information that is recorded in the audio signal recording area. Nevertheless, it is seen that the PCM audio signals recorded in one section may be independent of the PCM audio signals recorded in the other.

Various changes are of course possible. For example, each head assembly has been described as including two heads for recording two tracks simultaneously. If desired, three or more heads may be provided in each head assembly. Furthermore, the invention is not limited solely to the recording of HDTV and audio signals. If desired, a standard video signal may be recorded. Additionally, other information may be time division multiplexed with the video signals for recording, and the invention is not limited solely to the use of PCM audio signal information.

## Claims

1. Video signal recording apparatus comprising:

   video signal processing means (3, 5, 6, 10, 11) for processing a video signal in accordance with a predetermined format to produce a processed video signal for recording, said processed video signal having a DC level portion therein;
   burst clock generating means (8) for generating a burst clock signal of frequency $f_b$ for use in recovering the video signal during a subsequent reproduction operation;
   adding means (40A, 40B) for adding the burst clock signal to the DC level portion of the processed video signal to produce a combined signal;
   frequency modulating means (14A, 14B) for frequency modulating the combined signal such that the DC level of the processed video signal is represented by a modulated frequency $f_a$, and wherein if:

   $$f_a \geq \frac{m}{2} f_b,$$

   then $|2f_a - mf_b - f_b| \geq 0.15f_b$ and if:

   $$f_a < \frac{m}{2} f_b,$$

   then $|mf_b - 2f_a - f_b| \geq 0.15f_b$, where m is an integer; and recording means (70) for recording the frequency modulated combined signal on a record medium (18).

2. Apparatus according to claim 1 wherein:

   $$\frac{f_b}{f_a} \leq 0.4$$

3. Apparatus according to claim 2 wherein said burst clock signal has a modulation figure in the range from 0.7 to 1.4.

4. Apparatus according to claim 1 wherein said video signal includes luminance and chrominance components, and wherein said video signal processing means (3, 5, 6, 10, 11) includes multiplexing means (10A, 10B) for time division multiplexing said chrominance and luminance components such that the processed video signal is a time division multiplexed (TDM) video signal.

5. Apparatus according to claim 4 wherein the luminance component of the TDM video signal occupies a period approximately four times the period of the chrominance component of the TDM video signal.

6. Apparatus according to claim 4 wherein said DC level portion of the processed video signal is an achromatic level of said TDM video signal.

7. Apparatus according to claim 4 wherein said TDM video signal includes a horizontal synchronizing signal having a sync tip level, and said DC level portion of the processed video signal is the sync tip level of the horizontal synchronizing signal.

8. Apparatus according to claim 4 wherein said recording means (70) includes a rotary head drum (70) and said record medium (18) is wrapped about said drum (70) with a wrap angle of about 180°.

9. Apparatus according to claim 8 wherein said recording means (90) further comprises a source (41) of pulse code modulated (PCM) audio signals; and means (13A, 13B) for time division multiplexing said PCM audio signals and said combined signals.

**10.** Apparatus according to claim 9 wherein said video signal processing means (3, 5, 6, 10, 11) further includes timebase compressing means (6r, 61, 3A, 3B) for timebase compressing said TDM video signals to create a time interval into which the PCM audio signals are multiplexed for recording in common tracks on said record medium (18).

**11.** Apparatus according to claim 9 wherein said recording means comprises separating means (16A, 16B) for separating the time division multiplexed PCM audio and combined signals into a plurality of channels for recording on said record medium (18).

**12.** Apparatus according to claim 11 wherein said recording means (70) additionally includes a plurality of recording heads (17) for recording respective ones of said channels on said record medium (18).

**13.** Apparatus according to claim 12 wherein said recording heads (17) are mounted on said rotary drum (70) to rotate across said record medium (18) for recording at least two tracks simultaneously.

**14.** Apparatus according to claim 13 wherein said recording means (70) further includes two head assemblies (71) mounted on said rotary drum (70) approximately 180° apart with each head assembly (71) including two recording heads (17), such that four successive tracks are recorded at each rotation of said drum (70).

**Patentansprüche**

**1.** Videosignalaufzeichnungsgerät, bestehend aus:

einer Videosignalverarbeitungseinrichtung (3, 5, 6, 10, 11) zur Verarbeitung eines Videosignals in Übereinstimmung mit einem vorbestimmten Format zur Erzeugung eines einen Gleichsignalpegelteil aufweisenden verarbeiteten Videosignals zur Aufzeichnung, einer Bursttakterzeugungseinrichtung (8) zur Erzeugung eines Bursttaktsignals einer Frequenz $f_b$ zur Verwendung bei einer Wiedergewinnung des Videosignals während einer nachfolgenden Wiedergabeoperation, einer Addiereinrichtung (40A, 40B) zum Addieren des Bursttaktsignals zum Gleichsignalpegelteil des verarbeiteten Videosignals zur Erzeugung eines kombinierten Signals, einer Frequenzmodulationseinrichtung (14A, 14B) zum Frequenzmodulieren des kombinierten Signals derart, daß der Gleichsignalpegel des verarbeiteten Videosignals durch eine modulierte Frequenz $f_a$ dargestellt ist, wobei

$$|2f_a - m \cdot f_b| \geq 0{,}15 \cdot f_b \text{ für fa} \geq m \cdot f_b/2$$

und

$$|m \cdot f_b - 2f_a - f_b| \geq 0{,}15 \cdot f_b \text{ für fa} < m \cdot f_b/2$$

gilt und m eine ganze Zahl ist, und einer Aufzeichnungseinrichtung (70) zum Aufzeichnen des frequenzmodulierten kombinierten Signals auf einem Aufzeichnungsmedium (18).

**2.** Gerät nach Anspruch 1, wobei

$$f_b/f_a \leq 0{,}4$$

gilt.

**3.** Gerät nach Anspruch 2, wobei das Bursttaktsignal eine Modulationsfigur im Bereich von 0,7 bis 1,4 aufweist.

**4.** Gerät nach Anspruch 1, wobei das Videosignal eine Luminanz- und Chrominanzkomponente und die Videosignalverarbeitungseinrichtung (3, 5, 6, 10, 11) eine Multiplexeinrichtung (10A, 10B) zum Zeitmultiplexen der Chrominanz- und Luminanzkomponente derart, daß das verarbeitete Videosignal ein zeitmultiplextes Videosignal (TDM-Videosignal) ist, aufweist.

**5.** Gerät nach Anspruch 4, wobei die Luminanzkomponente des TDM-Videosignals eine Periode einnimmt, die annähernd das Vierfache der Periode der Chrominanzkomponente des TDM-Videosignals ist.

**6.** Gerät nach Anspruch 4, wobei der Gleichsignalpegelteil des verarbeiteten Videosignals ein achromatischer Pegel des TDM-Videosignals ist.

**7.** Gerät nach Anspruch 4, wobei das TDM-Videosignal ein Horizontalsynchronsignal mit einem Synchronspitzenpegel aufweist und der Gleichsignalpegelteil des verarbeiteten Videosignals der Synchronspitzenpegel des Horizontalsynchronsignals ist.

**8.** Gerät nach Anspruch 4, wobei die Aufzeichnungseinrichtung (70) eine Drehkopftrommel (70) aufweist und das Aufzeichnungsmedium (18) mit einem Wickelwinkel von etwa 180° um die Drehkopftrommel (70) gewickelt ist.

**9.** Gerät nach Anspruch 8, wobei die Aufzeichnungseinrichtung (90) eine Quelle (41) für pulscodemodulierte Audiosignale (PCM-Audiosignale) und eine Einrichtung (13A, 13B) zum Zeitmultiplexen der PCM-Audiosignale und kombinierten Signale aufweist.

**10.** Gerät nach Anspruch 9, wobei die Videosignalverarbeitungseinrichtung (3, 5, 6, 10, 11) eine Zeitbasiskompressionseinrichtung (6r, 61, 3A, 3B) zum Zeitbasiskomprimieren der TDM-Videosignale zur Erzeugung eines Zeitintervalls, in welches die PCM-Audiosignale zur Aufzeichnung in gemeinsamen Spuren auf dem Aufzeichnungsmedium (18) gemultiplext werden, aufweist.

**11.** Gerät nach Anspruch 9, wobei die Aufzeichnungseinrichtung eine Separationseinrichtung (16A, 16B) zum Separieren der zeitmultiplexten PCM-Audiosignale und kombinierten Signale in mehrere Kanäle zur Aufzeichnung auf dem Aufzeichnungsmedium (18) aufweist.

**12.** Gerät nach Anspruch 11, wobei die Aufzeichnungseinrichtung (70) zusätzlich mehrere Aufzeichnungsköpfe (17) zum Aufzeichnen je eines der Kanäle auf dem Aufzeichnungsmedium (18) aufweist.

**13.** Gerät nach Anspruch 12, wobei die Aufzeichnungsköpfe (17) derart auf der Drehtrommel (70) befestigt sind, daß sie sich quer über das Aufzeichnungsmedium (18) zur gleichzeitigen Aufzeichnung wenigstens zweier Spuren drehen.

**14.** Gerät nach Anspruch 13, wobei die Aufzeichnungseinrichtung (70) zwei auf der Drehtrommel (70) um annähernd 180° voneinander entfernt befestigte Kopfeinrichtungen (71) aufweist, wobei jede Kopfeinrichtung (71) zwei Aufzeichnungsköpfe (17) derart aufweist, daß bei jeder Drehung der Trommel (70) vier aufeinanderfolgende Spuren aufgezeichnet werden.

**Revendications**

**1.** Dispositif d'enregistrement de signal vidéo comprenant :

un moyen de traitement de signal vidéo (3, 5, 6, 10, 11) pour traiter un signal vidéo suivant un format prédéterminé pour produire un signal vidéo traité pour enregistrement, ledit signal vidéo contenant une partie de niveau de courant continu ;
un moyen générateur de salve de signal d'horloge (8) pour produire une salve de signal d'horloge de fréquence $f_b$ pour utilisation à la récupération du signal vidéo au cours d'une opération de reproduction ultérieure ;
un moyen d'addition (40A, 40B) pour additionner la salve de signal d'horloge à la partie de niveau de courant continu du signal vidéo traité pour produire un signal combiné ;

un moyen de modulation de fréquence (14A, 14B) pour moduler en fréquence le signal combiné, de façon telle que le niveau de courant continu du signal vidéo traité soit représenté par une fréquence modulée $f_a$, et dans lequel si :

$$f_a \geq \cdot \frac{m}{2} f_b, \text{ alors } |2f_a - mf_b - f_b| \geq 0,15 f_b$$

et si :

$$f_a < \frac{m}{2} f_b, \text{ alors } |mf_b - 2f_a - f_b| \geq 0,15 f_b,$$

où m est un nombre entier ; et
un moyen d'enregistrement (70) pour enregistrer, sur un support d'enregistrement (18), le signal combiné modulé en fréquence.

**2.** Dispositif selon la revendication 1, dans lequel :

$$\frac{f_b}{f_a} \leq 0,4$$

**3.** Dispositif selon la revendication 2, dans lequel ladite salve de signal d'horloge a un facteur de modulation dans la plage de 0,7 à 1,4.

**4.** Dispositif selon la revendication 1, dans lequel ledit signal vidéo comprend des composantes de luminance et de chrominance, et dans lequel ledit moyen de traitement de signal vidéo (3, 5, 6, 10, 11) comprend un moyen de multiplexage (10A, 10B) pour multiplexer par répartition dans le temps lesdites composantes de chrominance et de luminance de façon telle que le signal vidéo traité soit un signal vidéo multiplexé par répartition dans le temps (TDM).

**5.** Dispositif selon la revendication 4, dans lequel la composante de luminance du signal vidéo TDM occupe approximativement une période de quatre fois la période de la composante de chrominance du signal vidéo TDM.

**6.** Dispositif selon la revendication 4, dans lequel ladite partie de niveau continu du signal vidéo traité est un niveau achromatique dudit signal vidéo TDM.

**7.** Dispositif selon la revendication 4, dans lequel ledit signal vidéo TDM comprend un signal de synchronisation horizontale ayant un niveau de pointe de synchronisation, et dans lequel ladite partie de niveau continu du signal vidéo traité est le niveau de pointe de synchronisation du signal de synchronisation horizontale.

**8.** Dispositif selon la revendication 4, dans lequel ledit moyen d'enregistrement (70) comprend un tambour de têtes rotatif (70) et ledit moyen d'enregistrement (18) est enroulé autour dudit tambour (70) avec un angle d'enroulement d'environ 180°.

9. Dispositif selon la revendication 8, dans lequel ledit moyen d'enregistrement (90) comprend en outre une source (41) de signaux audio modulés par impulsions codées (PCM) ; et un moyen (13A, 13B) pour multiplexer par répartition dans le temps lesdits signaux audio PCM et lesdits signaux combinés.

10. Dispositif selon la revendication 9, dans lequel ledit moyen de traitement de signal vidéo (3, 5, 6, 10, 11) comprend en outre un moyen de compression de base de temps (6r, 61, 3A, 3B) pour comprimer la base de temps desdits signaux vidéo TDM pour créer un intervalle de temps dans lequel les signaux audio PCM sont multiplexés pour enregistrement dans des pistes communes sur ledit support d'enregistrement (18).

11. Dispositif selon la revendication 9, dans lequel ledit moyen d'enregistrement comprend un moyen de séparation (16A, 16B) pour séparer les signaux audio PCM multiplexés par répartition dans le temps et les signaux combinés entre plusieurs voies pour enregistrement sur ledit support (18).

12. Dispositif selon la revendication 11, dans lequel ledit moyen d'enregistrement (70) comprend de plus plusieurs têtes d'enregistrement (17) pour enregistrement de certaines respectives desdites voies sur ledit support d'enregistrement (18).

13. Dispositif selon la revendication 12, dans lequel lesdites têtes d'enregistrement (17) sont montées sur ledit tambour rotatif (70) pour tourner sur ledit support d'enregistrement (18) pour enregistrer au moins deux pistes en même temps.

14. Dispositif selon la revendication 13, dans lequel ledit moyen d'enregistrement (70) comprend en outre deux ensembles de têtes (71) montées sur ledit tambour rotatif (70) décalées d'environ 180°, chaque ensemble de têtes (71) comprenant deux têtes d'enregistrement (17), de façon telle que l'on enregistre quatre pistes successives à chaque rotation dudit tambour (70).

*F I G . 1*

B (Burst Signal)

H (Horizontal Sync . Signal )

*F I G . 2*

H (Horizontal
Sync. Signal )

B (Burst Signal )

*F I G . 3*

## F I G. 4

## F I G. 5

FIG. 6A

FIG.6

FIG.6A  FIG.6B

# FIG.6B

## FIG.7A

Luminance Signal

$Y_1$

$Y_2$

—1320 Samples—

## FIG.7B

Red Color Difference Signal(R-Y)

$C_{R1}$

$C_{R2}$

## FIG.7C

Blue Color Difference Signal(B-Y)

$C_{B1}$

$C_{B2}$

—330 Samples—

## FIG.7D

Channel A

$C_{R1}$

$Y_1$

## FIG.7E

Channel B

$C_{B2}$

$Y_2$

100 Samples    280 Samples    —1120 Samples—

## FIG.8

EP 0 472 442 B1

## FIG.9A

FIG.9

FIG9A FIG.9B

| Margin Area | | | | | | | | | | | | | | | |
|---|---|---|---|---|---|---|---|---|---|---|---|---|---|---|---|
| | 1119 R | 1115 R | | | | 619 R | 615 R | 611 R | 607 R | | | | | | |
| | 1118 B | 1114 B | | | | 618 B | 614 B | 610 B | 606 B | | | | | | |
| | 1117 R | 1113 R | | | | 617 R | 613 R | 609 R | 605 R | | | | | | |
| | 1116 B | 1112 B | | | | 616 B | 612 B | 608 B | 604 B | | | | | | |
| | 557 R | 553 R | | | | 57 R | 53 R | 49 R | 45 R | | | | | | |
| | 556 B | 552 B | | | | 56 B | 52 B | 48 B | 44 B | | | | | | |
| | 555 R | 551 R | | | | 55 R | 51 R | 47 R | 43 R | | | | | | |
| Margin Area | 554 B | 550 B | | | | 54 B | 50 B | 46 B | 42 B | | | AGC | V2 | X | X | X |

1H / 15H | Video Signal 129H | Clamping Area | 11.5H

143.5H(155.14°) | 11H

166.5H(180°)

# FIG.9B

Head Scanning Direction →

B Segment 4
A

B Segment 3
A

B Segment 2
A

B Segment 1
A

| X | X | | AGC | V₁ | X | Guard Band Area | Post-Amble Area | Audio 1,2 Area | Pre-Amble Area | Guard Band Area | Post-Amble Area | Audio 3,4 Area | Pre-Amble Area | | |

Margin Area

11.5H    Clamping Area    2H    1.26°    8.0°    2.0°    1.2°    1.2°    8.0°    2.0°    1.2°

11H

23H (24.86°)

166.5H ( 180° )

Starting End of Track

EP 0 472 442 B1